# DEMANDE DE BREVET EUROPEEN

(11) **EP 0 871 186 A1**
(43) Date de publication de la demande: **14.10.1998**
(21) Numéro de dépôt: 98200684.3
(22) Date de dépôt: 05.03.1998
(51) Int. Cl.: H01H 13/70, H04M 1/23, H04M 1/72

(54) **Appareil de communication d'informations, et notamment appareil telephonique équipé d'un clavier à touches modifié supprimant toute liaison électrique avec les circuits associés**

(30) Priorité: 18.03.1997 FR 9703289
(71) Demandeur: Koninklijke Philips Electronics N.V., 5621 BA Eindhoven (NL)
(72) Inventeur: Rapeli, Juha, 75008 Paris (FR)
(74) Mandataire: Landousy, Christian

(57) **Abrégé**

L'invention concerne un appareil de communication d'informations équipé d'un clavier à touches modifié supprimant toute liaison électrique avec les circuits associés. Un dispositif (23) de génération de signaux acoustiques est prévu et comprend sous chaque touche un organe mécanique capable de vibrer à une fréquence spécifique. Un sous-ensemble (25) détecte ces fréquences et, après conversion en signaux électriques, assure le traitement des informations correspondant à ceux-ci et donc aux touches spécifiquement sollicitées.
Application : appareils téléphoniques.

## Description

La présente invention concerne un appareil de communication d'informations, comprenant au moins un clavier à touches et un étage de traitement de signaux correspondant auxdites informations. Cette invention est utilisable dans tout dispositif utilisant un clavier, mais plus particulièrement pour la réalisation d'un clavier d'appareil téléphonique portable, numérique ou analogique.

L'abrégé N° 63-233647(A) de la demande de brevet japonais N° 62-65750 déposée le 23 mars 1987 décrit un équipement de transmission de données qui est destiné à mettre en communication un récepteur téléphonique et un ordinateur externe. Ledit équipement comprend à cet effet un clavier à touches auquel est associé un générateur de sons. Les sons émis lorsque ledit générateur est sollicité (par action sur une des touches) sont transmis à des circuits appropriés du récepteur téléphonique à l'aide d'un haut-parleur, pour que les signaux sonores ainsi émis puis reconvertis soient acheminés jusqu'audit ordinateur par le canal téléphonique classique.

Le but de l'invention est de proposer un dispositif de transmission de données équipé d'un générateur de sons d'un tout autre type.

A cet effet l'invention concerne un dispositif tel que défini dans le préambule et qui est en outre caractérisé en ce qu'il comprend, pour la définition desdits signaux, un dispositif de génération de signaux acoustiques spécifiques commandé par lesdites touches et un sous-ensemble de reconnaissance et de conversion desdits signaux acoustiques ainsi engendrés en signaux électriques à traiter.

Cette structure, qui constitue un dispositif mécaniquement très simple pour engendrer un signal acoustique spêcifique, présente divers avantages. La position du clavier par rapport à la carte de circuit imprimé peut désormais être quelconque, puisqu' il n'y a plus de liaison autre qu'acoustique entre les deux. Le clavier peut même avoir une forme différente de ceux réalisés jusqu'à présent, et être par exemple incurvé. Par ailleurs l'absence de liaison électrique entre l'arrière du clavier et la carte peut faciliter la réalisation d'un dispositif étanche. Enfin, on notera que les fréquences acoustiques peuvent être choisies en dehors de la gamme des fréquences audibles.

Selon une réalisation préférentielle de l'invention, ledit dispositif de génération de signaux acoustiques comprend, sous chaque touche, un organe mécanique de génération d'une tonalité acoustique spécifique dite signature acoustique associée à la touche concernée, et en ce que ledit sous-ensemble de reconnaissance et de conversion comprend un dispositif de détection de chacune desdites signatures acoustiques. Par exemple, l'organe mécanique associé à chaque touche comprend une pièce déformable capable, par l'action exercée sur la touche, de vibrer autour d'une position de repos, à une fréquence prédéterminée spécifique correspondant à ladite tonalité acoustique. Dans une variante de réalisation, cet organe mécanique peut aussi être un diaphragme convexe capable, sous l'action d'une déformation l'amenant en position concave, de retourner à sa position convexe d'origine en vibrant à une fréquence déterminée spécifique correspondant à ladite tonalité acoustique.

Quel que soit le mode de réalisation de cet organe mécanique, l'invention peut, en tout cas, tout particulièrement être mise en oeuvre dans un appareil téléphonique comprenant notamment un clavier à touches et un étage de traitement et/ou d'émission de signaux, remarquable en ce qu'il comprend un dispositif de génération de signaux acoustiques commandé par lesdites touches et un sous-ensemble de reconnaissance et de conversion desdits signaux acoustiques engendrés en signaux électriques à traiter et/ou émettre.

L'invention sera mieux comprise à l'aide de la description suivante et des dessins annexés, donnés à titre d'exemples non limitatifs et dans lesquels :
- la figure 1 montre un exemple de dispositif - ici un appareil téléphonique portable - dans lequel l'invention peut être mise en oeuvre ;
- la figure 2 illustre une vue de profil d'un appareil téléphonique incorporant la présente invention, et la figure 3 montre un exemple de réalisation des touches du clavier ;
- les figures 4 et 5 montrent un autre exemple de réalisation de chaque touche, respectivement au repos et en position opposée, en mouvement vibratoire de retour au repos.

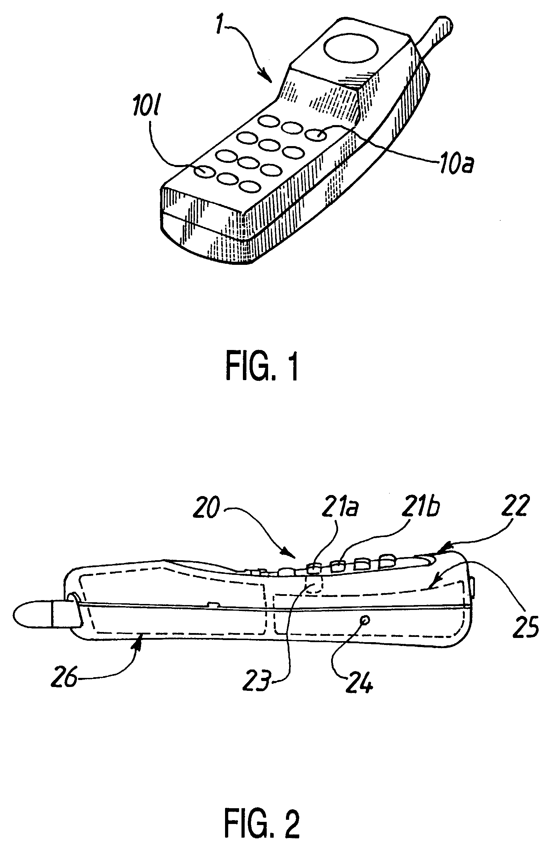

Dans l'exemple de réalisation representé sur la figure 1, le clavier d'un appareil téléphonique portable 1 comprend des touches, ici douze (10a à 10ℓ), correspondant aux nombres 0 à 9 et aux fonctions * et #, et destinées à être sollicitées mécaniquement par l'utilisateur. Au verso de chaque touche se trouve d'ordinaire un contact qui, sous l'effet de l'action exercée sur la touche sollicitée, ferme un circuit électronique de traitement de signal, en général en vue de la transmission de l'information correspondant à la touche, ou en vue de tout autre traitement non directement concerné par l'invention.

Dans une réalisation conforme à l'invention, représentée sur la figure 2 qui montre un appareil téléphonique en vue de profil, l'appareil complend un clavier 20 modifié, dont les touches 21a, 21b, etc... (en vue de profil, toutes ne sont pas visibles) sont placées comme précèdemment à la surface du boitier 22, mais ne comportent plus aucune connexion électrique sur leur face arrière située dans l'appareil. Chacune de ces touches, 21a par exemple, est simplement associée à un dispositif 23 purement mécanique, destiné à produire un son ou une tonalité spécifique, ou signature acoustique (ce dispositif 23, schématiquement référencé sur la figure 2, va être détaillé plus loin).

Le signal acoustique produit par action sur la touche 21a se propage et est reçu par un microphone 24. Ce microphone, situé plus loin dans le boîtier, est associé à des moyens électroniques de reconnaissance de cette signature acoustique, par exemple un circuit de traitement pouvant filtrer les sons émis, distinguer chacun l'un de l'autre, et ainsi reconnaître quelle touche a été sollicitée. Le microphone 24 et les moyens électroniques associés sont logés dans un sous-ensemble 25 constituant un module électronique. Un module 26, non dêtaillé, regroupe les moyens d'alimentation équipant l'appareil téléphonique.

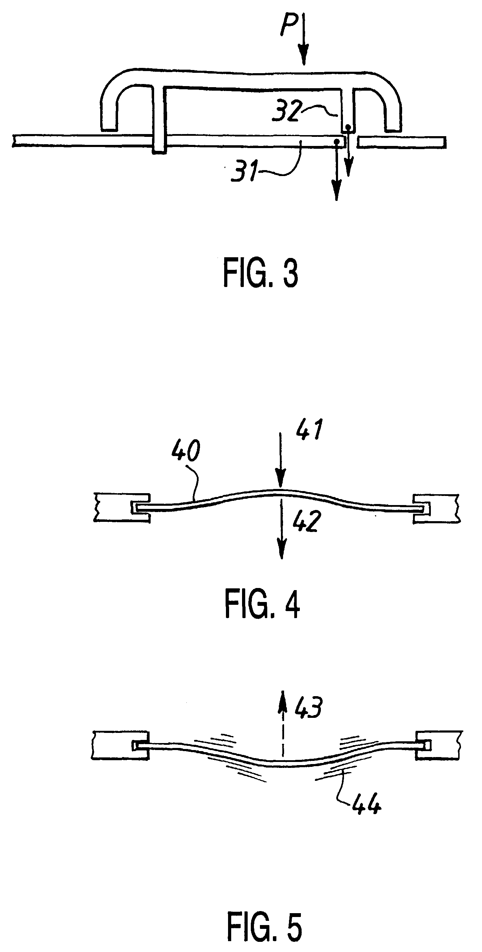

La constitution du dispositif 23 de génération de signaux acoustiques est par exemple celle de la figure 3. Sous chaque touche, une tige de poussée 32 est en appui contre une pièce déformable 31 capable de vibrer à une fréquence déterminée (spécifique à chaque touche), autour d'une position de repos, sous l'action d'une poussée P exercée sur la tige par l'intermédiaire de la touche. Selon une autre réalisation du dispositif 23 (figure 4, position de repos), celui-ci peut consister en une sorte de petite membrane ou diaphragme convexe, par exemple métallique. Lorsqu'une poussée (figure 4, flèche 41) est exercée sur ce diaphragme en position de repos, il se déforme et vient occuper (flèche 42) une position opposée où il est au contraire de forme concave. Ce changement d'état est réversible : dès que la poussée disparait, le diaphragme (figure 5, flèche 43) revient à sa position convexe initiale. Ce double mouvement rapide déclenche une brève vibration (référencé 44 sur la figure 5) du diaphragme, ou d'une partie de ce diaphragme, et produit le son ou la tonalité ayant la fréquence associée spécifiquement à chacune des touches. Bien entendu, quel que soit l'exemple de réalisation considéré, les fréquences spécifiques peuvent être choisies dans la gamme des fréquences audibles, ou au contraire en dehors de celle-ci. Dans l'un ou l'autre de ces exemples de réalisation, le sousensemble 25 détecte par l'intermédiaire du microphone 24 les signaux acoustiques correspondant à ces vibrations et convertit chaque signal acoustique spêcifique en un signal électrique à traiter, correspondant à l'information associée à la touche sollicitée.

## Revendications

1. Appareil de communication d'informations, comprenant au moins un clavier à touches et un étage de traitement de signaux correspondant auxdites informations, caractérisé en ce qu'il comprend, pour la définition desdits signaux, un dispositif de génération de signaux acoustiques spécifiques commandé par lesdites touches et un sous-ensemble de reconnaissance et de conversion desdits signaux acoustiques ainsi engendrés en signaux électriques à traiter.

2. Appareil selon la revendication 1, caractérisé en ce que ledit dispositif comprend, sous chaque touche, un organe mécanique de génération d'une tonalité acoustique spécifique, dite signature acoustique associée à la touche concernée, et en ce que ledit sous-ensemble de reconnaissance et de conversion comprend un dispositif de détection de chacune desdites signatures acoustiques.

3. Appareil selon la revendication 2, caractérisé en ce que chaque organe mécanique comprend une pièce déformable capable, par l'action exercée sur la touche, de vibrer autour d'une position de repos, à une fréquence prédéterminée spécifique correspondant à ladite tonalité acoustique.

4. Appareil selon la revendication 2, caractérisé en ce que chaque organe mécanique est un diaphragme convexe capable, sous l'action d'une déformation l'amenant en position concave, de retourner à sa position convexe d'origine en vibrant à une fréquence déterminée spécifique correspondant à ladite tonalité acoustique.

5. Appareil téléphonique comprenant notamment un clavier à touches et un étage de traitement et/ou d'émission de signaux, caractérisé en ce qu il comprend un dispositif de génération de signaux acoustiques commandé par lesdites touches et un sous-ensemble de reconnaissance et de conversion desdits signaux acoustiques engendrés en signaux électriques à traiter et/ou émettre.
